# EUROPEAN PATENT APPLICATION

(11) **EP 0 922 568 A1**
(43) Date of publication of application: **16.06.1999**
(21) Application number: 98921500.9
(22) Date of filing: 29.05.1998
(51) Int. Cl.: B32B 27/20, B32B 5/02, E04C 2/296

(54) **ARID-POLYMER CONSTRUCTION MATERIAL**

(30) Priority: 10.06.1997 ES 9701266
(71) Applicant: Electroacustica General Iberica, S.A., 50008 Zaragoza (ES)
(72) Inventor: SANCHEZ PEREZ, Antonio, E-50008 Zaragoza (ES); MARZAL IRIBAS, Miriam, E-50008 Zaragoza (ES)
(74) Representative: Perez Bonal, Bernardo
(86) International application number: ES9800154
(87) International publication number: WO9856579

(57) **Abstract**

The material is provided in the form of panels, bricks, tiles, etc. And is characterized as a prefabricated material having a low density, under 500 kg/m³ as an average, with excellent properties of mechanical resistance and resistance to atmospheric agents, is easy to manipulate, fire-proof, is a good heat insulating material and also accoustic insulating material and of moderate production cost; said material is based on expanded clay which is bonded by means of a resin, optionally with fillers, sandwiched between two glass fiber mats, with syntactic foams and/or resin with catalyst.

## Description

### OBJECT OF THE INVENTION

The invention here proposed consists of a polymeric aggregate material for construction, among the lightweight materials with insulating properties.

The hardness of the material of the present invention is similar to that of traditional materials but with the plasticity provided by polymeric materials. This material is preferably presented as panels, although other forms are also considered such as bricks, tiles, poured moulds, etc.

The invention characterises a prefabricated material of low density, between 250 and 775 kg/m3, with excellent load carrying properties and resistance to atmospheric agents, easy handling, fireproof, good heat insulation and also good sound insulation, as well as having moderate production costs.

To this end the product includes an expanded clay (arlite), setting in panel form by a resin and, occasionally, additional loads of deteriorated hollow glass microspheres (fillite), built in a sandwich of a cohesive material made of two fiberglass meshes of grammage between 40 and 200 g/m2, although alternatively one or both of the outer meshes may be eliminated, with proportional thicknessing of the panel or not.

### BACKGROUND OF THE INVENTION

The use of hollow core materials in construction has been known for several decades, with some of the brand or company names becoming everyday language, such as the aggregates generically known as vermiculite or arlite (expanded clay spheres), as well as several plastics (expanded polystyrene, polyester), cellular glass, etc.

All of these materials are used individually, not mixed with others, defining a wide variety of products which cover a range of applications in construction.

The applicant is unaware of the existence of panels, bricks or tiles built with the materials and coatings of the present invention.

### DESCRIPTION OF THE INVENTION

The invention object of the present memory refers to an outer layer for buildings among those having hollow core materials with insulating properties, preferably in panel form, which may be presented in different versions, both as a coating and as a self-supporting material, maintaining the hardness of the traditional aggregates but providing the plasticity of polymeric materials. Other forms are also contemplated, such as bricks, tiles or poured moulds.

As regards obtaining different construction materials, this product incorporates expanded clay nuclei between 3 and 6 mm and densities between 250 and 775 kg/m3.

The cohesive material incorporated in the gaps between the clay nuclei is a polyurethane resin with its corresponding catalyst, and optionally with loads, preferably of fillite (hollow glass microspheres) although others such as cut fiberglass, fly ash, calcium carbonate and the like are also possible.

There is also a coating ('sandwich skin') to improve the mechanical properties of the material, specifically cut fiberglass or fiberglass mesh of a grammage between 40 and 200 g/m2, covered in syntactic foam or alternatively only with the resin-catalyst set, also obtaining smooth surfaces with clay nuclei of between 0.1 and 1 mm.

### DESCRIPTION OF THE DRAWINGS

In order to complete the description in progress and with the aim of aiding a better comprehension of the characteristics of the invention a set of drawings is attached to the present memory as an integral part of it, in which, in an illustrative and non-limiting manner the following is shown:

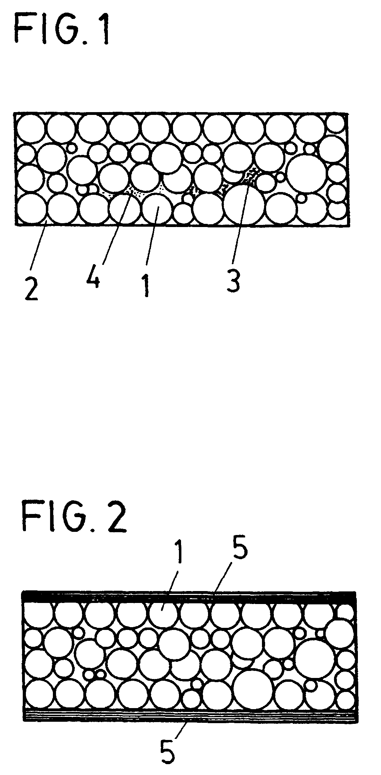

Figure 1 shows the version with the attack surface not covered by the mesh in a panel including the arlite, the resin, the catalyst and the loads.
Figure 2 is a panel as in the preferred embodiment of the invention, which incorporates coating material on both sides, the attack side and the lower side.
Figure 3 is a graph from a bending test carried out with a 180 x 70 x 30 mm test specimen.

### PREFERRED EMBODIMENT OF THE INVENTION

In view of the above statements, the present invention refers to a new polymeric aggregate material for construction, preferably in panel form, although it may be obtained in bricks, tiles, etc. by cutting large blocks or from moulds of different sizes with excellent mechanical properties and resistance to atmospheric agents, easy handling, fireproof, good thermal insulation and also good sound insulation, as well as moderate production costs.

This material incorporates expanded clay or similar balls, where cohesion is achieved in two different ways, either by a mixture of resin and catalyst or by a mixture of polyurethane resin and catalyst loaded with hollow or solid glass microspheres, thus obtaining a material of variable thickness, in the case of the panel of between 30 and 50 mm (considering that the tests carried out show that breaking load increases with thickness) as well as densities between 250 and 775 kg/m3.

Once this panel was obtained, the core of the sandwich when working with low thickness, tests were carried out with only one or both surfaces coated, in the latter case also with different coatings on each side, in order to obtain different mechanical properties, finally choosing a fiberglass mesh with a grammage between 40 and 200 gr/m2, covered or not by syntactic foam and/or by polyurethane resin and a catalyst, as well as with clay nuclei between 0.1 and 1 mm.

As mentioned above, the results obtained in the tests show that this new polymeric aggregate material for construction shows a different mechanical behaviour depending on the type of primary nuclei used in its fabrication, as well as on the load of the cohesive material.

Bending tests. - Equivalent bending tests have been carried out with test specimens of 180 x 70 x 30 mm obtained from moulds or cut by a circular saw from a cubic specimen of much greater size, having shown in this last case that there is no preferred cutting direction in the x y or z axes.

The bending test machine consists of a bridge with pillars of adjustable height, having a head with solid bars incorporating a hydraulic traction cylinder of 2500 kg, with a dynamometer which acts when traction begins on both ends, as well as a device which holds the test specimens, the force being applied on the specimen centrally and with a cylinder which couples to the head column.

The resistance to bending of the panels without any coating ranges from 11.5 kg to 65.3 kg for the specimens tested of 180 x 70 x 30 mm.

The different tests show that the greater average resistance to bending is shown by high density formulae, on the order of 723 kg/m3, while the percentage increase in load, after a certain limit, worsens the mechanical properties to the point where, for equal resin amounts, a 13.3 % charge degrades these properties.

Bending resistance increases with added loads, and for a 9 % load increase the test specimen is improved, depending on the formulation, from 83.17 % to 221.7 % with respect to a 0 % load.

In order to find the correct dose for covering the sandwich, as well as the one showing the best mechanical properties, better processability and lower density, impact print tests were carried out with specimens containing 6 % catalyst and different load percentages.

Impact print tests.- The machine used for impact print tests is of the type with columns with a transverse cross bar of adjustable height, marked up to 100 mm and with extended perforation on one guide, for a 500 g steel ball.

Preferred example.- The preferred coating provides average bending resistances from 11.5 kg to 391.18 kg for tested specimens of 180 x 70 x 30 mm and without including the coating, the average densities range from 425 to 723 kg/m3.

The component materials first selected for this coating are described as a preferred example; the ones mentioned after in brackets are possible alternatives:
-Primary nucleus: the nuclei used in the tests were arlite balls (1) known as G3, F3 and F5, corresponding to particle diameters of between 3 and 16 mm, with densities between 250 - 600 kg/m3, although in practice densities of up to 658 kg/m3 may be achieved.
Nuclei cohesive material: the resin used is a phenol resin (2) of the resol type supplied by Fers Resins corporation under the commercial name of TH-500*, with main characteristics of a high fire resistance and low contribution to combustion, low smoke production, high performance at high temperatures and quick aging.

Catalyst (3), also from Fers Resins is known commercially as C-501*.

Loads (4), alternatively employed, are the aforementioned hollow glass microspheres, fillite.

As regards the meshing, for the preferred example of the sandwich the fiberglass mesh (5) considered has a grammage of 150 g/m2, supplied by Groberglass, model GR-5.

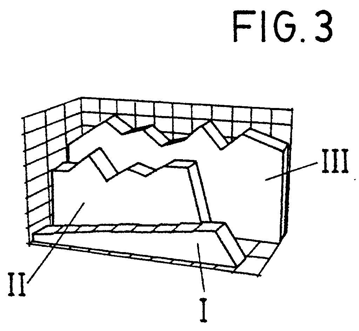

Figure 3 shows the bending load withstood for a given formula. As mentioned above, the tests have been carried out on test specimens of 180 x 70 x 30 mm. The abscissas identify the specimen and the ordinates show the kg in 50 kg increments.

In the forefront of the figure one can see the bending data for a given formula of this new polymeric aggregate material without any coating (I).

The following plane shows the load values with coating on one side, when built with a fiberglass mesh of 150 g/m2 joined with a syntactic foam (here shown as an example of the other versions tested).

It must be made clear that the side without coating is the one which receives the attack of the bending device.

The final plane shows the load values with both sides coated, each of them also built with 150 g/m2 fiberglass mesh joined with syntactic foam, as an example of those tested.

This description is not extended in the understanding that any expert in the field would have sufficient information to understand the scope of the invention and the advantages derived thereof, as well as to reproduce it.

It is also understood that as far as the essence of the invention is not altered, either variations in the materials used or in the shape, size and arrangement of the elements may vary within the same characterisation.

The terms used in the description and its meaning must always be considered in a non-limiting manner.

## Claims

1. Polymeric aggregate material for use in construction, among the lightweight and insulating materials, essentially characterised in that it is built in panels, bricks, tiles, poured moulds, etc. or by cutting from large blocks or from moulds of different sizes, which incorporates expanded clay (1), as well as a cohesive material, which consists of a resin (2) with its corresponding catalyst (3); it also incorporates a coating made of sandwiches of fiberglass mesh (5) and/or syntactic foam and/or resin (phenolic, epoxy, polyester) plus a catalyst.

2. Polymeric aggregate material for use in construction, as in above claim, characterised in that the resin (2) incorporates fillite (3) or hollow or solid glass microspheres in varying amounts.

3. Polymeric aggregate material for use in construction, as in above claims, characterised in that the expanded clay nuclei have diameters between 3 and 16 mm and densities ranging from 250 to 658 kg/m3.

4. Polymeric aggregate material for use in construction, as in above claims, characterised in that the fiberglass mesh has a grammage of between 40 and 200 g/m2.

5. Polymeric aggregate material for use in construction, as in above claims, characterised in that the fillite (3) or the hollow or solid glass microspheres are replaced with a cut fiberglass, fly ash, calcium carbonate and other similar products, also in varying amounts.

6. Polymeric aggregate material for use in construction, as in above claims, characterised in that one of the sandwich coatings of fiberglass mesh (5) or syntactic foam and / or resin plus a catalyst is eliminated, thicknessing the panel or not.

7. Polymeric aggregate material for use in construction, as in above claims, characterised in that both the sandwich coatings of fiberglass mesh (5) or syntactic foam and / or resin plus a catalyst is eliminated, thicknessing the panel appropriately.
